# EUROPEAN PATENT APPLICATION

(11) **EP 2 073 161 A1**
(43) Date of publication of application: **24.06.2009**
(21) Application number: 07785454.5
(22) Date of filing: 24.08.2007
(51) Int. Cl.: G06Q 30/00, G06Q 50/00, G06F 17/30

(54) **MATCHING METHOD AND SYSTEM FOR MARKETING CAMPAIGN RECOMMENDATION**

(30) Priority: 19.01.2007 CN 200710000761
(71) Applicant: Huawei Technologies Co., Ltd., Shenzhen, Guangdong Province 518129 (CN)
(72) Inventor: CHEN, Lingjiang, Shenzhen Guangdong 518129 (CN)
(74) Representative: Körber, Martin Hans
(86) International application number: PCT/CN2007/070557
(87) International publication number: WO 2008/095384

(57) **Abstract**

A method for matching a marketing service recommendation includes: receiving a marketing business condition described in a business language; converting the marketing business condition described in the business language into a logical condition described in a programming language according to a relationship between the business language and the programming language; and executing the logical condition to obtain matching information of the marketing service recommendation. A system for matching a marketing service recommendation is also disclosed. With the present invention, automated matching is implemented for a marketing service recommendation so that business people can configure a marketing business condition flexibly. The flexibility and practicality of a marketing management system are thus improved and the workload of system maintainers is relieved.

## Description

### Field of the Invention

The present invention relates to marketing service recommendation technologies, and in particular, to a method and system for matching a marketing service recommendation.

### Background of the Invention

Currently, matching a marketing service recommendation, which means "recommending which services for which customers", has always been an issue hard to resolve in all kinds of marketing management systems. The question "for which customers" means looking for target customers, and can be solved by using customer segmenting and grouping methods; the other question "recommending which services" means what kinds of services are suitable for these customers. In a prior art, in a marketing management system, usually business people propose a business strategy, and send a marketing business condition corresponding to the business strategy, including customer feature constraints and information of services recommended for the corresponding customers, to information technology (IT) people; IT people compile a program and then execute the program in a database to find target customers that match the marketing business condition and finally send the found target customers and recommended services corresponding to the target customers to the business people. Currently, most marketing management systems adopt this method, for example, an active marketing management system in the telecommunication industry.

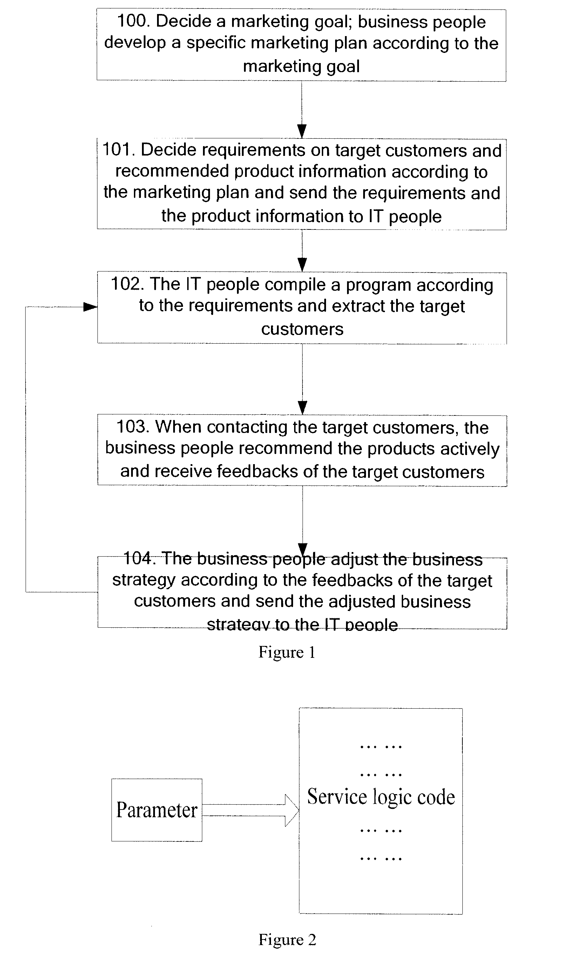

Figure 1 shows the procedure of a marketing method in a first prior art. As shown in Figure 1, the marketing method includes the following steps:

Step 100: Decide a marketing goal; business people develop a specific marketing plan according to the marketing goal.

Step 101: Decide requirements on target customers and product information to recommend to the target customers according to the marketing plan and send the requirements and the product information to IT people.

For example, the requirement on a target customer is a marketing business condition "toll fee larger than RMB 30", and the corresponding recommended service is service 1.

Step 102: The IT people compile a program according to the requirements and extract the target customers.

The IT people compile a program according to the requirements on the target customers and the recommended product information, that is, to convert the marketing business condition expressed in a business language into a programming language that is identifiable to a database. The IT people execute the program to extract the target customers from the customer feature library that stores customer information, service information and other useful information, and then send the target customers and the recommended products corresponding to the target customers to the business people. For example, if the target customers that match the marketing business condition "toll fee larger than RMB 30" are customer 1 and customer 2, the IT people construct matching information of the marketing service recommendation by using the recommended service 1 corresponding to customer 1 and the recommended service 2 corresponding to customer 2 and send the matching information to the business people.

Step 103: The business people recommend the corresponding products actively when contacting the target customers extracted in step 102 and obtain feedbacks of the target customers.

Step 104: The business people adjust the business strategy according to the target customer feedbacks received in step 103 and send the adjusted business strategy to the IT people for executing step 102.

The business strategy needs to be adjusted with the changes in the marketing goal or target customer feedbacks. Every time when the business strategy is changed, the IT people have to modify the program. This not only causes waste of working hours of IT people, but more importantly, can never catch up with the speed of business strategy changes. Therefore, a prior marketing management system is unable to implement automated matching of a marketing service recommendation, so that the efficiency of working people is not high.

In a prior art, one method to resolve the problem is that IT people provide editable parameters for business people when compiling a program. Figure 2 shows a method for executing the matching of a marketing service recommendation in a second prior art. When the business strategy changes, the business people adjust values of the parameters provided by the IT people, to partially adjust the business strategy, so that the system flexibility is improved. However, because the business people can only adjust a part of parameters while the service logic executed by the program to extract target customers is fixed, users can only adjust parameters on the basis of the prior service logic. If the service logic changes, the IT people still need to modify the program. For example, for the marketing business condition expressed in the business language "toll fee larger than RMB 30", the IT people set the condition value "30" as an adjustable parameter when compiling the program. In this case, the business people can only adjust the value 30 according to the business strategy but cannot adjust the service logic "larger than". If the business people need to change the marketing business condition to "toll fee smaller than RMB 20 and larger than RMB 5", because the service logic is changed, it is necessary for the IT people to modify the program. Therefore, the method for executing matching of a marketing service recommendation in the second prior art still cannot achieve automated matching of the marketing service recommendation. As a result, the efficiency of using the marketing management system is low and therefore, the workload of IT people is heavy.

### Summary of the Invention

An embodiment of the present invention provides a method for matching a marketing service recommendation so as to achieve automated matching of marketing service recommendations.

An embodiment of the present invention provides a system for matching a marketing service recommendation so as to achieve automated matching of marketing service recommendations.

To achieve the above objectives, the technical solution of embodiments of the present invention is implemented as follows:

A method for matching a marketing service recommendation includes:

receiving a marketing business condition described in a business language;

converting the marketing business condition described in the business language into a logical condition described in a programming language according to a preset map between the business language and the programming language; and

executing the logical condition to obtain matching information of the marketing service recommendation.

A system for matching a marketing service recommendation includes a condition management module, a condition converting module, a user interface module, a logical condition executing module and a database storage module, where:

the condition management module is adapted to send a received marketing business condition to the condition converting module;

the condition converting module is adapted to receive the marketing business condition from the condition management module, convert the received marketing business condition described in a business language into a logical condition described in a programming language according to a map between the business language and the programming language preset in the database storage module, and send the logical condition to the logical condition executing module;

the logical condition executing module is adapted to receive the logical condition from the condition converting module, execute the logical condition to obtain matching information of the marketing service recommendation, and send the matching information of the marketing service recommendation to the user interface module;

the user interface module is adapted to receive and display the matching information of the marketing service recommendation from the logical condition executing module;

the database storage module is adapted to store the preset map between the business language and the programming language.

Compared with the prior art, the method and system for matching a marketing service recommendation provided by embodiments of the invention converts an entered marketing business condition described in the business language into a logical condition described in the programming language and executes the logical condition after conversion to obtain the matching information of the marketing service recommendation. Thus, when a business strategy changes, a marketing management system is able to convert the marketing business condition corresponding to the updated business strategy into a logical condition and execute the logical condition, not requiring IT people to modify the program or compile a new program. Therefore, embodiments of the present invention implement automated matching of marketing service recommendations and improve the efficiency of utilizing the marketing management system.

### Brief Description of the Drawings

Figure 1 shows the procedure of a marketing method in a first prior art;

Figure 2 shows a method for matching a marketing service recommendation in a second prior art;

Figure 3 shows a method for matching a marketing service recommendation according to an embodiment of the invention;

Figure 4 shows the procedure of a method for matching a marketing service recommendation according to an embodiment of the invention;

Figure 5 shows the procedure of a method for converting a marketing business condition according to an embodiment of the invention; and

Figure 6 shows the structure of a system for matching a marketing service recommendation according to an embodiment of the invention.

### Detailed Description of the Invention

The present invention is described in detail with reference to the accompanying drawings and specific embodiments hereunder.

A method for matching a marketing service recommendation provided by an embodiment of the invention converts a marketing business condition described in a business language into a logical condition described in a programming language according to a relationship between a business language and a programming language, and executes a logical condition after conversion to obtain matching information of the marketing service recommendation.

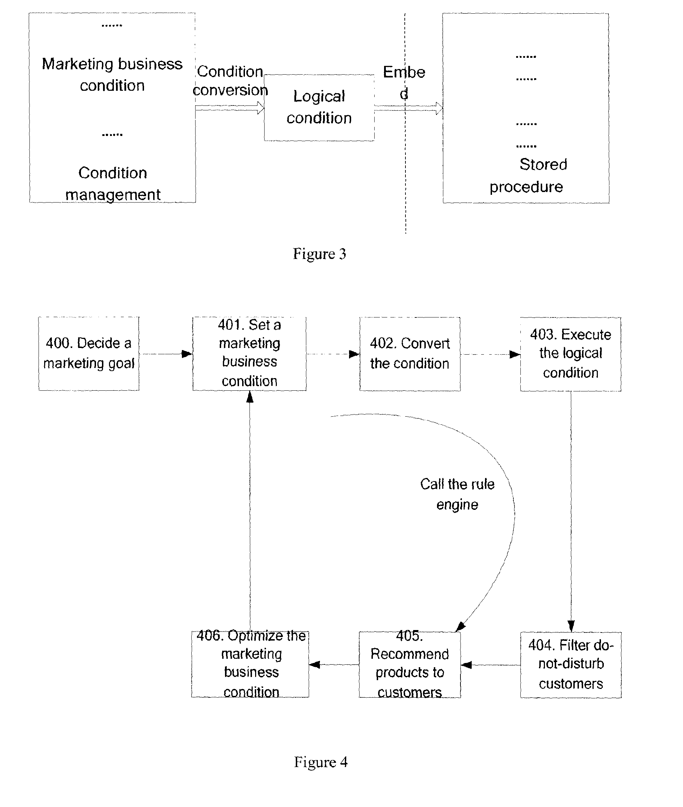

A marketing business system in an embodiment of the invention introduces a rule engine so that the service logic is independent of the program compiled by IT people in the prior art to form an independent condition management module. As shown in Figure 3, the marketing business condition created according to a business strategy is set by business people via the rule engine.

After the condition management module receives a marketing business condition entered by the business people, the rule engine calls the condition conversion procedure to convert the marketing business condition into a logical condition which is then embedded into a pre-written stored procedure template and saved as a stored procedure that the database can call directly. The matching process of a marketing service recommendation is thus completed to obtain matching information of the marketing service recommendation, including target customers that meet the marketing business condition and recommended services corresponding to the target customers.

Therefore, the above embodiment of the invention includes a rule engine to call the marketing business condition management, marketing business condition conversion and logical condition execution processes so as to obtain matching information of the marketing service recommendation. The service logic is independent of the program compiled by IT people in the prior art so that the service logic is loosely coupled with lower layer codes. When the business strategy changes, it is only necessary that business people set the marketing business condition according to the new business strategy via the rule engine, while modifying the program by IT people is unnecessary.

In this embodiment of the invention, the relationship between the business language and the programming language is stored in a database table, which includes a symbol information table that stores a relationship between symbol descriptions in the business language and symbol names in the programming language and a condition value table that stores condition values in the marketing business condition. The database table also includes a customer feature library and a metadata information table generated according to the customer feature library; that is, the metadata information table stores relationship between field names in the business language and field names in the programming language preset according to the customer feature library.

Figure 4 shows the procedure of a method for matching a marketing service recommendation in an embodiment of the invention. As shown in Figure 4, the method includes the following steps:

Step 400: Decide a marketing goal.

For example, business people set forth a marketing plan and a business strategy according to the short-term or medium-term marketing goal of a company.

Step 401: Set a marketing business condition.

The marketing business condition is set by business people in the foreground interface of a marketing management system according to the business strategy. The field names in the marketing business condition are field aliases in the metadata information table.

The customer feature library includes a large amount of customer information. In the telecommunication industry, for example, customer features include basic information, behavior information and extension information, where basic information may include customer name, telephone number, sex, and registration time; behavior information includes call fee, toll fee, roaming fee, call duration in minutes, and fee growth rate; extension information may include customer chum rate and customer value. The method for creating a customer feature library is the same as the method in the prior art.

The attribute information in the customer feature library is stored in the database in the form of metadata to form a metadata information table, the main configuration of which is described in Table 1. In Table 1, "field name" is the field name stored in the customer feature library, i.e. the field name used in the programming language; "field alias" is the field name displayed to business people by the foreground interface of the marketing management system, i.e. the field name used in the business language; "table corresponding to external key" is the name of a database table corresponding to the field in the customer feature library; "corresponding field" is a field corresponding to the field in the database. For example, in the foreground interface of the marketing management system, business people see the field "home area" while the related content of the field stored in the customer feature library is "ssdq", which is an external key. The corresponding database table is "area information table" and the corresponding field may be "ssdq".

**Table 1 Metadata information table**

| Field Name | Field Alias | Field Type | Key Type | Table Corresponding to External Key | Corresponding Field | Corresponding Descriptive Field |
|---|---|---|---|---|---|---|
| ssdq | Home area | Character | External key | Area information table | ssdq | User home area |
| chf | Toll fee | Data | None | None | None | None |
| arpu | arpu | Data | None | None | None | None |

When the system is initially built, the rule engine finds the aliases of all fields in the metadata information table and sends the aliases to the foreground interface of the marketing management system for display, so that business people are able to set a marketing business condition according to these fields.

Step 402: Convert the condition.

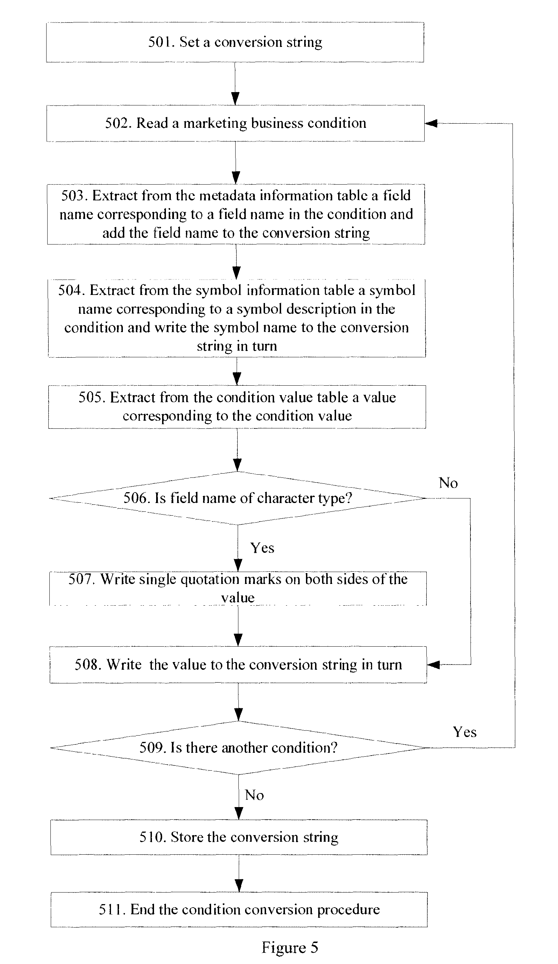

The marketing business condition set by the business people is managed and stored in the business language. Therefore, it is necessary to convert the marketing business condition described in the business language into a logical condition identifiable to the programming language. Figure 5 shows the procedure of a method for converting the marketing business condition in an embodiment of the invention. As shown in Figure 5, the method includes the following steps:

Step 501: Set a conversion string.

The conversion string is used to store the logical condition after conversion.

Step 502: Read a marketing business condition.

For example, the marketing business condition entered by business people in the foreground interface is "(arpu larger than or equal to RMB 60 and arpu smaller than or equal to RMB 102, where arpu stands for average revenue per user) and toll fee smaller than RMB 12" and the rule engine stores this marketing business condition as condition 1 "(arpu larger than or equal to RMB 60", condition 2 "and", and condition 3 "arpu smaller than or equal to RMB 120)", condition 4 "and", and condition 5 "toll fee smaller than RMB 12". The rule engine also corresponds to the parameter values in the marketing business condition to the condition IDs and stores the relationship between the parameter values in the marketing business condition and the condition IDs as a condition value table.

Step 503: Extract from the metadata information table a field name in the customer feature library corresponding to a field name in the condition and write the field to the conversion string.

For example, among the five conditions in step 502, condition 1 "(arpu larger than or equal to RMB 60" is first converted: first, write parentheses "(" to the conversion string; then, find the field name "arpu" corresponding to the field alias "arpu" in the metadata information table and write "arpu" after parentheses "(" in the conversion string.

Step 504: Extract from the symbol information table a symbol name corresponding to a symbol description in the condition and write the symbol name to the conversion string in turn.

**Table 2 Symbol information table**

| Symbol Description | Symbol Name |
|---|---|
| Larger than | > |
| Belong to | In |
| And | and |
| Larger than or equal to | >= |
| Smaller than or equal to | <= |
| Smaller than | < |
| ··· | ··· |

For example, when converting condition 1, the method first finds the symbol name ">=" corresponding to the symbol description "larger than or equal to" in the symbol information table and writes ">=" after "arpu" in the conversion string.

Steps 505-508: Extract from the condition value table a value corresponding to the condition value, determine whether the field is of character type, and if so, write the value to the conversion string with single quotation marks on both sides of the value.

**Table 3 Condition value table**

| Condition | Parameter Value 1 | Parameter Value 2 |
|---|---|---|
| 1 | 60 | |
| 3 | 120 | |
| 5 | 12 | |

For example, in step 502, conditions that include a parameter value are conditions 1, 3, and 5. Then, in this table, the condition field is 1, 3, and 5 and the corresponding parameter values are respectively 60, 120, and 12. In actual conversion, after finding the parameter value corresponding to condition 1 in this table, the method determines whether the field in the condition is of data or character type. If the field is of data type, the method writes the parameter in the conversion string directly; if the field is of character type, after writing single quotation marks to the value, the method writes the value in the conversion string.

Step 509: Determine whether there are other marketing business conditions and if so, go back to step 502; otherwise, continue with step 510.

In this step, among the five conditions in step 502, after condition 1 is converted, condition 2 is converted and written in the conversion string in turn. Then, conditions 3, 4, and 5 are converted and written in the conversion string in turn in the same procedure.

When converting condition 2 is "and", the method first finds the symbol name "and" corresponding to the symbol description "and" in the symbol information table and writes "and" after the parameter value of condition 1 in the conversion string.

When converting condition 3 is "arpu smaller than or equal to RMB 120)", the method first finds in the metadata information table the field name "arpu" corresponding to the field alias "arpu" and writes "arpu" after "and" in the conversion string; then, finds in the symbol information table the symbol name "<=" corresponding to the symbol description "smaller than or equal to" , and writes "<=" after "arpu" of condition 3 in the conversion string; finally, finds in the condition value table the parameter value corresponding to condition 3 and writes the value after "<=" in the conversion string. Meanwhile, parentheses ")" is added after the parameter value corresponding to condition 2 in the conversion string.

When converting condition 4 is "and", the method first finds the symbol name "and" corresponding to the symbol description "and" in the symbol information table and writes"and" after ")" in the conversion string.

When converting condition 5 is "toll fee smaller than RMB 12", the method finds in the metadata information table the field name "chf" corresponding to the field alias "toll fee" and writes "chf" after the second "and" in the conversion string; then, finds in the symbol information table the symbol name "<" corresponding to the symbol description "smaller than" and writes "<" after "chf" in the conversion string; finally, finds in the condition value table the parameter value corresponding to condition 5 and writes the value after "<" of condition 5 in the conversion string.

After the five conditions are all converted, the method continues with step 510.

Step 510: Store the conversion string, or the logical condition.

In this step, the rule engine embeds the logical condition after conversion, i.e. the content of the conversion string, in the pre-written stored procedure template; that is, saving the logical condition after conversion as a stored procedure.

Step 511: End the condition conversion procedure.

By calling the foregoing condition conversion procedure, the logical condition is obtained as listed in Table 4.

**Table 4 Conversion result of the marketing business condition**

| Marketing Service Condition before Conversion | Logical Condition after Conversion |
|---|---|
| (arpu larger than or equal to RMB 60 and arpu smaller than or equal to RMB 120) and toll fee smaller than RMB 12 | (arpu>=60 and arpu<=120) and chf<12 |

Step 403: Execute the logical condition to obtain the matching information of the marketing service recommendation.

The rule engine triggers the database to call the stored procedure of the logical condition; that is, the customer feature library calls the stored procedure of the logical condition to find specific target customers that meet the marketing business condition in the customer feature library and obtain matching information of the marketing service recommendation, including target customers and the recommended service information corresponding to the target customers.

By executing the logical condition, the matching information between customers and recommended services is obtained. Table 5 lists the matching information of the marketing service recommendation.

**Table 5 Matching information table of the marketing service recommendation**

| Customer Name | Recommended Service 1 | Recommended Service 2 | Recommended Service 3 | Recommended Service 4 |
|---|---|---|---|---|
| Xxx | Service y | Service z | Service k | Service l |
| Yyy | Service z | Service l | Service k | Service m |

Step 404: Filter do-not-disturb customers.

The customer feature library stores information of do-not-disturb customers. The rule engine queries whether the matching information of the marketing service recommendation includes do-not-disturb customers. The do-not-disturb customers may be sensitive customers or customers that have received the marketing service recommendation or have complained several times. Delete such customers if any to generate the final matching information of the marketing service recommendation; otherwise, output the final matching information of the marketing service recommendation.

Step 405: Recommend the corresponding products to the customers.

When business people contact a target customer, the business people recommend the corresponding products actively and obtain feedbacks of the target customer.

Step 406: Optimize the marketing business condition.

Business people adjust and optimize the marketing strategy according to the actual marketing effects and feedbacks of the target customers and modify the marketing business condition according to the adjusted and optimized marketing strategy. Thus, a complete marketing loop is formed.

Between step 403 and step 404, or between step 404 and step 405, the method may further rank multiple services recommended to a target customer according to preset priorities of the recommended services.

Because the set marketing business condition may include a number of groups of requirements on target customers, target customers meeting different requirements match different recommended services. When the logical conditions of all marketing business conditions are executed, different customer groups may overlap. This means one customer may match multiple recommended services. In this case, it is necessary to set a policy for adjusting the sequence of recommended services, or adjusting the priorities of recommended services.

The priority of a recommended service may be set manually. That is, priorities of services may be set in a product information library, indicating which service is recommended first and which service is recommended next. After the logical condition is executed, the rule engine checks the number of recommended services corresponding to a customer. If one customer matches multiple recommended services, the rule engine finds the priorities of these recommended services in the product information library and adjusts the sequence of recommended services according to the priorities.

For a recommended service without a priority, the rule engine in the embodiment of the invention adjusts the sequence according to certain preset parameters automatically. For example, the rule engine in the telecommunication industry is set to first recommend a service to a customer that is used by over 80% people in the communication circle of the customer but is not currently used by the customer. For example, a certain customer is not using the color ring-back tone service, so the service may be recommended to the customer. The rule engine first checks the communication circle of the customer in the customer feature library of the database. If 80% people in the communication circle of the customer are using color ring-back tones, the service is recommended to the customer with high priority; if fewer than 20% people in the communication circle of the customer are using color ring-back tones, the rule engine considers recommending other services with high priority.

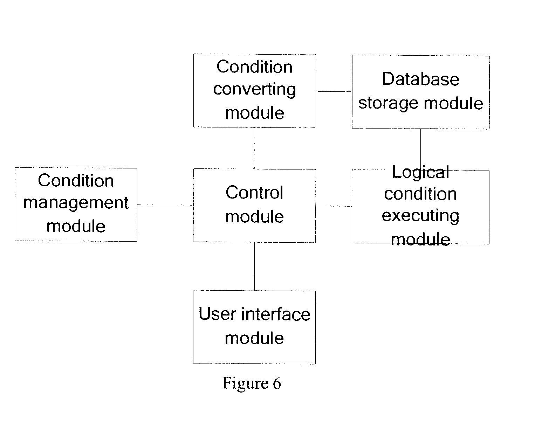

Figure 6 shows a system for matching a marketing service recommendation according to an embodiment of the invention. As shown in Figure 6, the system includes a condition management module, a control module, a condition converting module, a user interface module, a logical condition executing module, and a database storage module.

The condition management module is adapted to send a received marketing business condition to the control module.

The control module is adapted to receive the marketing business condition from the condition management module and forward the marketing business condition to the condition converting module; receive a logical condition from the condition converting module and forward the logical condition to the logical condition executing module; receive matching information of the marketing service recommendation from the logical condition executing module and forward the matching information to the user interface module for display.

The user interface module is adapted to receive and display the matching information of the marketing service recommendation from the control module.

The condition converting module is adapted to receive the marketing business condition forwarded by the control module, convert the marketing business condition described in a business language into a logical condition described in a programming language according to a relationship between the business language and the programming language, which is a database table stored in the database storage module including a metadata information table and a symbol information table, and send the logical condition to the control module.

The logical condition executing module is adapted to receive the logical condition forwarded by the control module, execute the logical condition according to the database table stored in the database storage module including a customer feature library to obtain the matching information of the marketing service recommendation, and send the matching information to the control module.

The database storage module is adapted to store the map between the business language and the programming language in the database table and store the customer feature library of customer information.

The database table includes a metadata information table, a symbol information table and a condition value table.

The metadata information table is adapted to store a relationship between field names in the business language and field names in the programming language and send field names found by the condition converting module and corresponding to field names in the marketing business condition to the condition converting module; the symbol information table is adapted to store a relationship between symbol descriptions in the business language and symbol names in the programming language and send the symbol names found by the condition converting module and corresponding to the symbol descriptions in the marketing business condition to the condition converting module; the condition value table is adapted to store condition values in the marketing business condition sent by the condition converting module and send the condition values found by the condition converting module to the condition converting module.

After receiving the marketing business condition sent by the control module, the condition converting module stores the condition values in the marketing business condition to the condition value table in the database storage module.

The customer feature library stores information of do-not-disturb customers. The system may further include a do-not-disturb filtering module. The control module receives the matching information of the marketing service recommendation from the logical condition executing module and sends the matching information to the do-not-disturb filtering module. The do-not-disturb filtering module receives the matching information of the marketing service recommendation from the control module, deletes the do-not-disturb customers from the marketing service recommendation information according to the do-not-disturb customer information in the customer feature library, and sends the marketing service recommendation information to the control module. The control module receives the matching information of the marketing service recommendation sent by the do-not-disturb filtering module after the do-not-disturb customers are filtered.

The system may further include a priority adjusting module. After receiving the matching information of the marketing service recommendation from the logical condition executing module, the control module sends the matching information to the priority adjusting module; the priority adjusting module receives the matching information of the marketing service recommendation from the control module, rearranges multiple recommended services corresponding to one target customer in the matching information of the marketing service recommendation according to the customer feature library in the database storage module, and sends the rearranged matching information to the control module; the control module receives the matching information of the marketing service recommendation from the priority adjusting module after the priorities are adjusted.

An embodiment of the invention provides another system for matching a marketing service recommendation. The system includes a condition management module, a condition converting module, a user interface module, a logical condition executing module and a database storage module.

The condition management module is adapted to send a received marketing business condition to the condition converting module; the condition converting module is adapted to received the marketing business condition from the condition management module, convert the received marketing business condition described in a business language into a logical condition described in a programming language according to a map between the business language and the programming language preset in the database storage module, and send the logical condition to the logical condition executing module; the logical condition executing module is adapted to receive the logical condition from the condition converting module, execute the logical condition to obtain the matching information of the marketing service recommendation, and send the matching information to the user interface module; the user interface module is adapted to receive and display the matching information of the marketing service recommendation; the database storage module is adapted to store the relationship between the business language and the programming language.

The database storage module includes one or more database tables. The database tables may include a metadata information table, a symbol information table and a condition value table.

The metadata information table is adapted to store a relationship between field names in the business language and field names in the programming language and send field names found by the condition converting module and corresponding to field names in the marketing business condition to the condition converting module.

The symbol information table is adapted to store a relationship between symbol descriptions in the business language and symbol names in the programming language and send the symbol names found by the condition converting module and corresponding to the symbol descriptions in the marketing business condition to the condition converting module.

The condition value table is adapted to store condition values in the marketing business condition sent by the condition converting module and send the condition values found by the condition converting module to the condition converting module.

The condition converting module stores the condition values in the marketing business condition to the condition value table in the database storage module.

The database storage module also stores a customer feature library which includes information of do-not-disturb customers. The system further includes a do-not-disturb filtering module. The logical condition executing module sends the matching information of the marketing service recommendation to the do-not-disturb filtering module; the do-not-disturb filtering module, after receiving the matching information of the marketing service recommendation from the logical condition executing module, deletes the do-not-disturb customers and corresponding recommended services according to the do-not-disturb customer information and sends the updated matching information to the user interface module.

The system further includes a priority adjusting module; the logical condition executing module sends the matching information of the marketing service recommendation to the priority adjusting module; the priority adjusting module, after receiving the matching information of the marketing service recommendation sent by the logical condition executing module, rearranges the recommended service in the matching information of the marketing service recommendation and sends the rearranged matching information to the user interface module.

To sum up, the method and system for matching a marketing service recommendation provided by embodiments of the invention incorporate a rule engine to separate the marketing business condition and the programming language logic so that business people may enter a marketing business condition in the foreground interface of a marketing management system. The rule engine calls the condition management, condition conversion and logical condition execution processes to obtain the matching information of the marketing service recommendation, which is matching information between recommended services and target customers, so that IT people only need to maintain related database tables without the need to compile a new program. The workload of IT people is thus relieved. In addition, the marketing business condition is separated from the programming language logic so that the marketing business condition can be configured flexibly; therefore, the flexibility and practicality of the system are also improved.

Although the present invention has been described through several exemplary embodiments, the invention is not limited to such embodiments. It is apparent that those skilled in the art can make various modifications and variations to the invention without departing from the spirit and scope of the invention. The invention is intended to cover the modifications and variations provided that they fall in the scope of protection defined by the following claims or their equivalents.

## Claims

1. A method for matching a marketing service recommendation, comprising:
receiving a marketing business condition described in a business language;
converting the marketing business condition described in the business language into a logical condition described in a programming language according to a preset map between the business language and the programming language; and
executing the logical condition to obtain matching information of the marketing service recommendation.

2. The method of claim 1, wherein the matching information of the marketing service recommendation comprises target customers that meet the marketing business condition and recommended services corresponding to the target customers.

3. The method of claim 1, wherein the map between the business language and the programming language is stored in a database table, which comprises a metadata information table adapted to store a preset map between field names in the business language and field names in the programming language, and a symbol information table adapted to store a preset map between symbol descriptions in the business language and symbol names in the programming language.

4. The method of claim 3, wherein the step of setting the metadata information table comprising the map between field names in the business language and field names in the programming language comprises: saving attribute information in a customer feature library that stores customer information in the form of metadata as a metadata information table.

5. The method of claim 4, after receiving the marketing business condition, further comprising: saving a condition value in the marketing business condition to a condition value table.

6. The method of claim 5, wherein the step of converting the marketing business condition described in the business language into a logical condition described in the programming language comprises:
setting a conversion string for saving the logical condition; reading the marketing business condition;
extracting from the metadata information table a field name in the customer feature library corresponding to a field name in the marketing business condition and adding the field name to the conversion string;
extracting from the symbol information table a symbol name corresponding to a symbol description in the marketing business condition and adding the symbol name to the conversion string in turn;
extracting a condition value from the condition value table and adding the condition value to the conversion string in turn according to a field type corresponding to the field name in the marketing business condition; and
saving the conversion string as the logical condition.

7. The method of claim 6, wherein the step of saving the conversion string as the logical condition comprises: saving the conversion string as a stored procedure of the logical condition.

8. The method of claim 7, wherein the step of executing the logical condition to obtain matching information of the marketing service recommendation comprises:
triggering the customer feature library to call the stored procedure of the logical condition, where the customer feature library calls the stored procedure of the logical condition to find target customers that meet the logical condition.

9. The method of claim 6, wherein the step of adding the condition value to the conversion string in turn according to a field type corresponding to a field name in the marketing business condition comprises:
determining whether the field is of character type and if so, adding single quotation marks on both sides of the condition value and adding the condition value to the conversion string in turn; otherwise, adding the condition value to the conversion string directly.

10. The method of claim 4, wherein the customer feature library stores do-not-disturb customer information and the method further comprises: deleting do-not-disturb customers in the target customers and corresponding recommended services according to the do-not-disturb customer information in the customer feature library.

11. The method of claim 4, wherein the customer feature library stores a proportion of customers in a communication circle of a customer that use a recommended service and the method further comprises: arranging sequence of multiple recommended services corresponding to a target customer according to the proportion of customers in the communication circle of the customer that use the recommended services.

12. The method of claim 1, further comprising: arranging the sequence of multiple recommended services corresponding to a target customer according to preset priorities of the recommended services.

13. A system for matching a marketing service recommendation, comprising a condition management module, a condition converting module, a user interface module, a logical condition executing module and a database storage module, wherein:
the condition management module is adapted to send a received marketing business condition to the condition converting module;
the condition converting module is adapted to receive the marketing business condition from the condition management module, convert the received marketing business condition described in a business language into a logical condition described in a programming language according to a map between the business language and the programming language preset in the database storage module, and send the logical condition to the logical condition executing module;
the logical condition executing module is adapted to receive the logical condition from the condition converting module, execute the logical condition to obtain matching information of the marketing service recommendation, and send the matching information of the marketing service recommendation to the user interface module;
the user interface module is adapted to receive and display the matching information of the marketing service recommendation; and
the database storage module is adapted to store the preset map between the business language and the programming language.

14. The system of claim 13, wherein the database storage module comprises one or more database tables.

15. The system of claim 14, wherein the database table(s) may comprise a metadata information table, a symbol information table, and a condition value table, wherein:
the metadata information table is adapted to store a preset map between field names in the business language and field names in the programming language and send field names found by the condition converting module and corresponding to field names in the marketing business condition to the condition converting module;
the symbol information table is adapted to store a preset map between symbol descriptions in the business language and symbol names in the programming language and send symbol names found by the condition converting module and corresponding to symbol descriptions in the marketing business condition to the condition converting module;
the condition value table is adapted to store condition values in the marketing business condition sent by the condition converting module and send condition values found by the condition converting module to the condition converting module; and
the condition converting module is further adapted to store the condition values in the marketing business condition to the condition value table in the database storage module.

16. The system of claim 13, wherein the database storage module comprises a customer feature library.

17. The system of claim 16, wherein the customer feature library comprises do-not-disturb customer information and the system further comprises a do-not-disturb filtering module;
the logical condition executing module is further adapted to send the matching information of the marketing service recommendation to the do-not-disturb filtering module; and
the do-not-disturb filtering module is adapted to receive the matching information of the marketing service recommendation sent by the logical condition executing module and send the matching information of the marketing service recommendation to the user interface module after deleting do-not-disturb customers and corresponding recommended services according to the do-not-disturb customer information in the customer feature library.

18. The system of claim 13, further comprising a priority adjusting module, wherein:
the logical condition executing module is further adapted to send the matching information of the marketing service recommendation to the priority adjusting module; and
the priority adjusting module is adapted to receive the matching information of the marketing service recommendation sent by the logical condition executing module and send the matching information of the marketing service recommendation to the user interface module after rearranging recommended services in the matching information of the marketing service recommendation.
